# EUROPÄISCHE PATENTSCHRIFT

(11) **EP 4 261 451 B1**
(45) Veröffentlichungstag und Bekanntmachung des Hinweises auf die Patenterteilung: **25.06.2025**
(21) Anmeldenummer: 22167672.9
(22) Anmeldetag: 11.04.2022
(51) Int. Cl.: F16L 55/035, B60R 16/02, H02G 3/32, F16L 55/033

(54) **ELASTISCHES DÄMPFUNGSELEMENT**
ELASTIC DAMPING ELEMENT
ÉLÉMENT ÉLASTIQUE D'AMORTISSEMENT

(43) Veröffentlichungstag der Anmeldung: 18.10.2023
(73) Patentinhaber: Poppe Elastomertechnik GmbH, 35392 Giessen (DE)
(72) Erfinder: LEIB, Luca, 35649 Bischoffen (DE); LANGLOTZ, Lars, 99867 Gotha (DE); FLADUNG, Niklas, 36167 Nüsttal (DE); DANIELS, Till, 35463 Fernwald (DE)
(74) Vertreter: Patentship Patentanwaltsgesellschaft mbH

(56) Entgegenhaltungen:
- DE-A1- 102016 116 231
- DE-A1- 102016 116 238
- DE-A1- 3 025 601
- DE-U1- 202005 008 570
- DE-U1- 202017 100 299
- US-A1- 2008 105 796

## Beschreibung

Die vorliegende Erfindung betrifft ein elastisches Dämpfungselement zum Dämpfen von Vibrationen einer Leitung, insbesondere einer fluidführenden Leitung oder einer elektrischen Leitung.

In unterschiedlichsten Anwendungen werden Leitungen, insbesondere fluidführende Leitungen oder elektrische Leitungen, beispielsweise in einem beengten Bauraum verwendet bzw. mit anderen Bauteilen verbunden. Um zu verhindern, dass in dem Bauraum auftretende Vibrationen sich auf entsprechende Leitungen in dem Bauraum übertragen und unter Umständen die mechanischen und/oder elektrischen Eigenschaften der Leitungen beeinträchtigen können, können Dämpfungselemente an den Leitungen angebracht werden. Entsprechende Dämpfungselemente sich jedoch oftmals aufwendig herzustellen und zu montieren, und können oftmals nicht ausreichend fest an den Leitungen befestigt werden.

Die Druckschrift EP 1 099 899 A2 beschreibt einen Schlauch zur Halterung von Rohrleitungen. Dieser Schlauch ist aus einem Vollmaterial hergestellt, und besteht aus zwei unterschiedlich harten Komponenten.

Die Druckschrift DE 20 2005 008 570 U1 beschreibt eine Befestigungsvorrichtung für eine Leitung.

Die Druckschrift DE 20 2017 100 299 U1 beschreibt eine Haltevorrichtung zum Halten einer Leitung.

Es ist die der Erfindung zugrundeliegende Aufgabe, ein elastisches Dämpfungselement zum Dämpfen von Vibrationen einer Leitung bereitzustellen, welches vorteilhafte Dämpfungseigenschaften aufweist, und an der Leitung wirksam befestigt werden kann.

Diese Aufgabe wird durch die Gegenstände mit den Merkmalen nach den unabhängigen Ansprüchen gelöst. Vorteilhafte Ausführungsformen der Erfindung sind Gegenstand der Figuren, der Beschreibung und der abhängigen Ansprüche.

Gemäß einem ersten Aspekt der Erfindung wird die Aufgabe durch ein elastisches Dämpfungselement zum Dämpfen von Vibrationen einer Leitung gelöst, mit einem elastischen Hülsenring zum Umschließen der Leitung, wobei der elastische Hülsenring eine der Leitung zugewandte Innenwandung aufweist, welche einen Hülsenringinnenraum zum Aufnehmen der Leitung umschließt, wobei in der Innenwandung eine Mehrzahl von sich radial erstreckenden Ausnehmungen geformt ist, wobei zwischen zwei nebeneinander in der Innenwandung geformten Ausnehmungen jeweils ein sich in Richtung des Hülsenringinnenraums erstreckender gekrümmter und spitz zulaufender Steg geformt ist.

Dadurch wird der technische Vorteil erreicht, dass die gekrümmten und spitz zulaufenden Stege eine besonders wirksame Klemmwirkung auf die in dem Hülsenringinnenraum aufgenommene Leitung ausüben können, so dass eine besonders wirksame Fixierung der Leitung durch das elastische Dämpfungselement erreicht wird.

Durch die gekrümmte und spitz zulaufende Form der Stege sind die Montagekräfte zudem niedriger als bei herkömmlich verwendeten Dämpfungselementen. Zudem sind die Rotationskräfte gleichwertig, da sich die Stege durch die gekrümmte und spitz zulaufende Form beim Rotieren des elastischen Dämpfungselements um die Leitung verkeilen.

Somit kann eine wirksame Halterung der Leitung innerhalb des elastischen Dämpfungselements sichergestellt werden und kann eine wirksame Dämpfung von Vibrationen der Leitung erreicht werden.

Die gekrümmte und spitz zulaufenden Stege können sich, während des Einführens der Leitung in das elastische Dämpfungselement, radial nach außen verformen. Aufgrund der elastischen Eigenschaften der gekrümmten und spitz zulaufenden Stege drücken die elastischen Stege gegen eine Außenfläche der umschlossenen Leitung und ermöglichen eine wirksame Befestigung der Leitung in dem elastischen Dämpfungselement.

Somit stellen die gekrümmten und spitz zulaufenden Stege sicher, dass das elastische Dämpfungselement und die Leitung wirksam vibrationstechnisch entkoppelt sind. Je nach Durchmesser der von dem elastischen Dämpfungselement umschlossenen Leitung können die gekrümmten und spitz zulaufenden Stege unterschiedlich weit radial verformt werden. Somit kann sichergestellt werden, dass unterschiedliche Leitungen mit unterschiedlichen Durchmessern von dem elastischen Dämpfungselement umschlossen werden können und durch die elastischen Stege wirksam fixiert werden können. Gleichzeitig kann eine wirksame Dämpfung von Vibrationen der Leitungen mit unterschiedlichen Durchmessern sichergestellt werden.

Insbesondere umfasst die Leitung eine fluidführende Leitung, insbesondere eine fluidführende Leitung in einem Fahrzeug, insbesondere in Form von Schläuchen, Rohren und dergleichen, wie z.B. Kraftstoffleitungen, Hydraulikflüssigkeitsleitungen oder Ladeluftleitungen, um einen wirksamen Betrieb des Fahrzeugs sicherzustellen. Bei Betrieb des Fahrzeugs können durch bewegliche Bauteile, wie z.B. durch den Verbrennungsmotor, Vibrationen entstehen. Um die Leitungen von dem Motorgehäuse vibrationstechnisch zu entkoppeln und damit zu verhindern, dass sich die Vibrationen auf die Leitungen übertragen, stellt das elastische Dämpfungselement sicher, dass eine ausreichende Dämpfung von Vibrationen ermöglicht wird.

Insbesondere umfasst die Leitung eine elektrische Leitung, insbesondere eine Stromleitung oder eine Signalleitung in einem elektrischen Bauteil.

Der elastische Hülsenring des elastischen Dämpfungselements ist als ein in Umlaufrichtung des elastischen Hülsenrings geschlossener Hülsenring geformt.

Alternativ ist der elastische Hülsenring des elastischen Dämpfungselements als ein in Umlaufrichtung des elastischen Hülsenrings verschließbarer Hülsenring geformt, so dass der elastische Hülsenring hier geöffnet werden kann, um die Leitung aufzunehmen, und so dass der elastische Hülsenring anschließend wieder verschlossen werden kann, um die in dem elastischen Hülsenring aufgenommene Leitung zu fixieren.

Insbesondere ist das elastische Dämpfungselements als ein Abstandshalter ausgebildet, welcher die in dem elastischen Hülsenring aufgenommene Leitung von anderen Bauteilen, wie z.B. einem Gehäuse beabstandet, um zu verhindern, dass die in dem elastischen Hülsenring aufgenommene Leitung in Kontakt mit den anderen Bauteilen, insbesondere dem Gehäuse kommt.

Insbesondere umfasst die in dem elastischen Hülsenring aufgenommene Leitung eine elektrische Leitung, wobei hierbei insbesondere das elastische Dämpfungselements als ein Abstandshalter ausgebildet ist, welcher die in dem elastischen Hülsenring aufgenommene elektrische Leitung von anderen elektrischen Leitungen beabstandet, so dass eine wirksame elektrische, bzw. elektromagnetische Entkopplung zwischen den entsprechenden elektrischen Leitungen sichergestellt wird.

In einer vorteilhaften Ausführungsform sind die Stege in dieselbe Umlaufrichtung gekrümmt geformt.

Dadurch wird der technische Vorteil erreicht, dass beim Einführen der Leitung in den Hülsenringinnenraum die Stege in diese Richtung radial nach außen ausfedern, so dass die Leitung wirksam in den Hülsenringinnenraum eingeführt werden kann. Anschließend beaufschlagen die gekrümmten und spitz zulaufenden Stege die Außenwandung der Leitung gleichmäßig und umlaufend mit einer Kraft, um eine wirksame Fixierung der Leitung in dem elastischen Hülsenring sicherzustellen.

In einer vorteilhaften Ausführungsform weist der jeweilige Steg eine erste gekrümmte Stegseitenwand auf, welche einer ersten Ausnehmung der beiden nebeneinander in der Innenwandung geformten Ausnehmungen zugewandt ist, und weist der jeweilige Steg eine zweite gekrümmte Stegseitenwand auf, welche einer zweiten Ausnehmung der beiden nebeneinander in der Innenwandung geformten Ausnehmungen zugewandt ist, wobei insbesondere die erste gekrümmte Stegseitenwand des jeweiligen Stegs als eine erste konkav gekrümmte Stegseitenwand geformt ist, und wobei insbesondere die zweite gekrümmte Stegseitenwand des jeweiligen Stegs als eine zweite konvex gekrümmte Stegseitenwand geformt ist.

Dadurch wird der technische Vorteil erreicht, dass die erste und zweite gekrümmte Stegseitenwand den Steg wirksam von den jeweiligen Ausnehmungen abgrenzt, so dass die erste gekrümmte Stegseitenwand und die zweite gekrümmte Stegseitenwand wirksam ausfedern können, wenn die Leitung in den Hülsenringinnenraum eingeführt wird.

Die erste gekrümmte Stegseitenwand und die zweite gekrümmte Stegseitenwand sind insbesondere in dieselbe Krümmungsrichtung gekrümmt.

In einer vorteilhaften Ausführungsform erstreckt sich der jeweilige Steg entlang einer Steglängsachse, welche sich parallel zu einer Leitungslängsrichtung der durch den elastischen Hülsenring umschließbaren Leitung erstreckt, wobei die erste gekrümmte Stegseitenwand und die zweite gekrümmte Stegseitenwand jeweils um eine sich parallel zu der jeweiligen Steglängsachse erstreckende erste und zweite Krümmungsachse gekrümmt sind, wobei die jeweilige Krümmungsachse gegenüber der jeweiligen Steglängsachse entlang einer Umlaufrichtung des elastischen Hülsenrings verlagert ist.

Dadurch wird der technische Vorteil erreicht, dass die Stege wirksam nach außen ausfedern können.

In einer vorteilhaften Ausführungsform ist eine Stegspitze des jeweils radial in Richtung des Hülsenringinnenraums gekrümmt und spitz zulaufenden Stegs ausgebildet, an einer in dem Hülsenringinnenraum aufgenommenen Leitung anzuliegen, wobei die jeweilige Stegspitze insbesondere ausgebildet ist, durch die an der Stegspitze anliegende Leitung, zumindest abschnittsweise radial in Richtung der Innenwandung verlagert zu werden, um eine Anpresskraft auf die Leitung bereitzustellen.

Dadurch wird der technische Vorteil erreicht, dass durch die radiale Verlagerung der Stegspitzen in Richtung der Innenwandung eine Federkraft in den Stegen vorhanden ist, welche ursächlich für die Anpresskraft ist, welche die Stege auf die Leitung ausüben, um die Leitung zu fixieren.

In einer vorteilhaften Ausführungsform erstreckt sich jeweils eine Radialrichtungsachse des jeweiligen Stegs von einem Mittelpunkt einer Grundfläche des jeweiligen Stegs zu einer Hülsenmittelachse des elastischen Hülsenrings, wobei der jeweilige Steg eine Stegmittelachse aufweist, welche sich von einer Stegspitze des jeweiligen radial in Richtung des Hülsenringinnenraums des elastischen Hülsenrings radial spitz zulaufenden Stegs zu dem Mittelpunkt der Grundfläche des jeweiligen Stegs erstreckt, und wobei sich die jeweilige Stegmittelachse winklig zu der jeweiligen Radialrichtungsachse erstreckt.

Dadurch wird der technische Vorteil erreicht, dass eine wirksame Krümmung des jeweiligen Stegs sichergestellt wird, welche ein wirksames Ausfedern des Stegs beim Einführen der Leitung in den Hülsenringinnenraum sicherstellt.

In einer vorteilhaften Ausführungsform weist der elastische Hülsenring eine der Leitung abgewandte Außenwandung auf, wobei an der Außenwandung eine Mehrzahl von sich radial erstreckenden Außenstegen geformt ist, welche ausgebildet sind, eine Abstandshaltung zu außerhalb des elastischen Dämpfungselements angeordneten Bauteilen sicherzustellen, wobei die Außenstege insbesondere nebeneinander in Umlaufrichtung des elastischen Hülsenrings an der Außenwandung angeordnet sind, und wobei insbesondere zwei in Umlaufrichtung an der Außenwandung nebeneinander angeordnete Außenstege durch jeweils eine Außenstegausnehmung voneinander beabstandet sind.

Dadurch wird der technische Vorteil erreicht, dass außerhalb des elastischen Dämpfungselements angeordnete Bauteile durch die Außenstege wirksam auf Abstand zu dem elastischen Dämpfungselement gehalten werden können, so dass eine Beschädigung der in dem elastischen Hülsenring aufgenommen Leitung durch die Bauteile ausgeschlossen werden kann.

In einer vorteilhaften Ausführungsform weisen die jeweiligen Außenstege jeweils eine dem Hülsenringinnenraum abgewandte Außenstegoberseite, insbesondere eine gerade geformte Außenstegoberseite, auf, wobei die Außenstege jeweils eine erste Außenstegseitenwand, insbesondere eine gekrümmt geformte erste Außenstegseitenwand aufweisen, welche einer ersten Außenstegausnehmung der beiden Außenstegausnehmungen zugewandt ist, und/oder wobei die Außenstege jeweils eine zweite Außenstegseitenwand, insbesondere eine gekrümmt geformte zweite Außenstegseitenwand aufweisen, welche einer zweiten Außenstegausnehmung der beiden Außenstegausnehmungen zugewandt ist.

Dadurch wird der technische Vorteil erreicht, dass die Außenstegoberseite einen wirksamen Kontakt zu den außerhalb des elastischen Dämpfungselements angeordneten Bauteilen sicherstellt, und dass sich die beiden Außenstegseitenwände, insbesondere die beiden gekrümmten Außenstegseitenwände, beim Kontakt des Außenstegs mit dem Bauteil vorteilhaft verformen können, um eine vorteilhafte Dämpfung bereitzustellen.

In einer vorteilhaften Ausführungsform weist der elastische Hülsenring einen Verschlussabschnitt zum Schließen des elastischen Hülsenrings um die Leitung auf, wobei insbesondere an einem ersten Bereich des Verschlussabschnitts ein Widerhaken gebildet ist, und wobei insbesondere an einem zweiten Bereich des Verschlussabschnitts eine Aufnahmeöffnung zum Aufnehmen des Widerhakens gebildet ist.

Dadurch wird der technische Vorteil erreicht, dass der elastische Hülsenring nicht als ein geschlossener Hülsenring geformt ist, sondern als ein verschließbarer Hülsenring geformt ist, welcher zum Aufnehmen der Leitung geöffnet werden kann, und welcher anschließend geschlossen werden kann, um die Leitung wirksam aufzunehmen und zu fixieren.

Der Widerhaken ermöglichen hierbei ein vorteilhaftes Einschnappen in die Aufnahmeöffnung so dass ein einfach bereitzustellender Verschluss des elastischen Hülsenrings ermöglicht wird.

In einer nicht unter den Schutzumfang der Ansprüche fallenden Ausführungsform weist der elastische Hülsenring eine der Leitung abgewandte Außenwandung auf, wobei an der Außenwandung eine Klebeelement angeordnet ist, welches ausgebildet ist, das elastische Dämpfungselement mit einem weiteren Bauteil durch eine Klebeverbindung zu verbinden.

Dadurch wird der technische Vorteil erreicht, dass das Klebeelement eine wirksame stoffschlüssige Verbindung des elastischen Dämpfungselements mit dem weiteren Bauteil sicherstellt.

In einer nicht unter den Schutzumfang der Ansprüche fallenden Ausführungsform weist das Klebeelement eine Klebeoberfläche auf, welche durch ein lösbar mit der Klebeoberfläche verbundenes Abziehelement abgedeckt ist, wobei das lösbar mit der Klebeoberfläche verbundene Abziehelement ausgebildet ist, von der Klebeoberfläche entfernt zu werden, um die Klebeoberfläche zum Bereitstellen der Klebeverbindung mit dem weiteren Bauteil freizulegen, wobei das Abziehelement insbesondere einen Greifabschnitt aufweist, welcher von der Außenwandung absteht.

Dadurch wird der technische Vorteil erreicht, dass das Abziehelement die Klebeoberfläche während des Transports des Klebeelements schützt. Durch das Abziehen des Abziehelements durch den Nutzer des elastischen Dämpfungselements kann die Klebeoberfläche wirksam freigelegt werden, um die Klebeverbindung mit dem weiteren Bauteil zu ermöglichen.

Erfindungsgemäß weist der elastische Hülsenring eine der Leitung abgewandte Außenwandung auf, wobei an der Außenwandung ein Befestigungselement angeordnet ist, welches sich radial von der Außenwandung erstreckt und ausgebildet ist, das elastische Dämpfungselement mit einem zusätzlichen Bauteil steckbar zu verbinden.

Dadurch wird der technische Vorteil erreicht, dass das an der Außenwandung angeordnete Befestigungselement eine wirksame Steckverbindung zur Befestigung des elastischen Dämpfungselements an dem zusätzlichen Bauteil ermöglicht.

Das Befestigungselement ist insbesondere als eine Befestigungsrippe ausgebildet, welche insbesondere einstückig mit der Außenwandung des elastischen Dämpfungselements ausgebildet ist. Die Befestigungsrippe erstreckt sich hierbei an der Außenwandung insbesondere parallel einer Hülsenmittelachse des elastischen Hülsenrings.

Alternativ ist das Befestigungselement insbesondere als ein Befestigungsstift ausgebildet, welcher insbesondere nicht einstückig mit der Außenwandung des elastischen Dämpfungselements ausgebildet ist. Der Befestigungsstift ist insbesondere als ein zusätzliches Bauteil ausgebildet, welches mit der Außenwandung des elastischen Dämpfungselements verbunden ist, beispielsweise dadurch, dass in der Außenwandung des elastischen Dämpfungselements ein gestanztes Loch, insbesondere Rundloch, vorgesehen ist, in welches der Befestigungsstift eingesetzt ist, insbesondere durch eine Clipverbindung.

Erfindungsgemäß weist das Befestigungselement einen Befestigungsschaft auf, welcher mit der Außenwandung des elastischen Hülsenrings verbunden ist, und welcher sich von der Außenwandung aus in Richtung des zusätzlichen Bauteils erstreckt und ausgebildet ist, durch eine Befestigungsöffnung des zusätzlichen Bauteils durchgeführt zu werden, und wobei an dem Befestigungsschaft zumindest ein Befestigungsvorsprung angeordnet ist, welcher ausgebildet ist, an einer dem elastischen Dämpfungselement abgewandten Seite des zusätzlichen Bauteils anzuliegen, um eine wirksame Befestigung des Befestigungselements an dem zusätzlichen Bauteil sicherzustellen.

Dadurch wird der technische Vorteil erreicht, dass eine besonders wirksame Befestigung des elastischen Dämpfungselements an dem zusätzlichen Bauteil ermöglicht wird.

Ist das Befestigungselement insbesondere als ein Befestigungsstift ausgebildet, ist die entsprechende Befestigungsöffnung des zusätzlichen Bauteils insbesondere als ein Rundloch ausgebildet, durch welche der Befestigungsschaft des als Befestigungsstift ausgebildeten Befestigungselements durchführbar ist.

Ist das Befestigungselement insbesondere als eine Befestigungsrippe ausgebildet, ist die entsprechende Befestigungsöffnung des zusätzlichen Bauteils insbesondere als ein Langloch ausgebildet, durch welche der rippenartig geformte Befestigungsschaft des als Befestigungsrippe ausgebildeten Befestigungselements durchführbar ist.

Erfindungsgemäß weist die Außenwandung des elastischen Hülsenrings eine dem zusätzlichen Bauteil zugewandte Kontaktfläche auf, wobei an der Kontaktfläche ein Anlageelement, insbesondere eine Anlagenrippe und/oder ein Anlagering, angeordnet ist, welches ausgebildet an einer dem elastischen Hülsenring zugewandten Wandung des zusätzlichen Bauteils anzuliegen.

Dadurch wird der technische Vorteil erreicht, dass das an der Kontaktfläche angeordnete Anlageelement eine wirksame Dämpfung zwischen dem elastischen Dämpfungselement und dem zusätzlichen Bauteil sicherstellt.

Gemäß einem zweiten Aspekt der Erfindung wird die Aufgabe durch ein elastisches Befestigungssystem gelöst mit einem elastischen Dämpfungselement nach dem ersten Aspekt und einer Leitung, welche in dem durch die Innenwandung des elastischen Hülsenrings umschlossenen Hülsenringinnenraum aufgenommen ist.

Dadurch wird der technische Vorteil erreicht, dass eine besonders wirksame vibrationstechnische Entkopplung der Leitung erreicht wird.

Ausführungsbeispiele der Erfindung sind in den Zeichnungen dargestellt und werden im Folgenden näher beschrieben.

Es zeigen:
- Fig. 1: eine Seitenansicht eines elastischen Dämpfungselements gemäß einer ersten nicht unter den Schutzumfang der Ansprüche fallenden Ausführungsform;
- Fig. 2: eine Seitenansicht eines elastischen Dämpfungselements gemäß einer zweiten nicht unter den Schutzumfang der Ansprüche fallenden Ausführungsform;
- Fig. 3: eine Seitenansicht eines elastischen Dämpfungselements gemäß einer dritten Ausführungsform;
- Fig. 4: eine Seitenansicht eines elastischen Dämpfungselements gemäß einer vierten nicht unter den Schutzumfang der Ansprüche fallenden Ausführungsform in einer geschlossenen Stellung;
- Fig. 5: eine Seitenansicht eines elastischen Dämpfungselements gemäß der vierten Ausführungsform in einer geöffneten Stellung;
- Fig. 6: eine Seitenansicht eines elastischen Dämpfungselements gemäß einer fünften nicht unter den Schutzumfang der Ansprüche fallenden Ausführungsform;
- Fig. 7: eine Seitenansicht eines elastischen Dämpfungselements gemäß einer sechsten Ausführungsform; und
- Fig. 8: eine Seitenansicht eines elastischen Dämpfungselements gemäß einer siebten Ausführungsform.

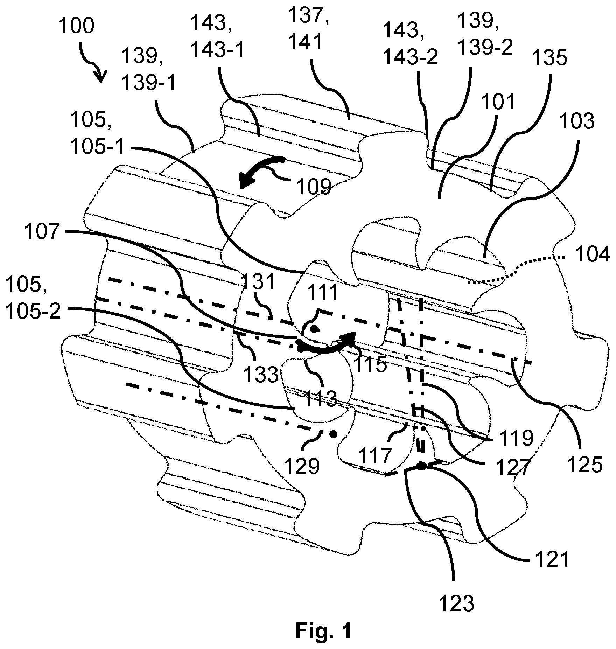

Fig. 1 zeigt eine Seitenansicht eines elastischen Dämpfungselements gemäß einer ersten Ausführungsform. Das in Fig. 1 dargestellte elastische Dämpfungselement 100 dient zur Aufnahme einer in Fig. 1 nicht dargestellten Leitung, beispielsweise einer fluidführenden Leitung oder einer elektrischen Leitung, insbesondere einer Leitung mit einem Leitungsdurchmesser zwischen 4 mm und 10 mm, wobei jedoch alternativ auch ein elastisches Dämpfungselement 100 zur Aufnahme einer Leitung mit einem größeren Leitungsdurchmesser bereitgestellt werden kann. Das elastische Dämpfungselement 100 stellt hierbei sicher, dass die aufgenommene Leitung in Position gehalten wird, und etwaige außerhalb des elastischen Dämpfungselements 100 angeordnete Bauteile bei einem auftretenden Kontakt mit dem elastischen Dämpfungselement 100 gedämpft werden. Hierdurch werden akustische Geräusche entkoppelt und Schwingungen der in dem elastischen Dämpfungselement 100 aufgenommenen Leitung können nicht an die außerhalb angeordneten Bauteile weitergegeben werden. Sind entsprechende Leitungen als elektrische Leitungen ausgebildet und wird für die entsprechenden Leitungen jeweils ein elastisches Dämpfungselement 100 verwendet, kann durch die elastischen Dämpfungselemente 100 auch eine wirksame Beabstandung zwischen den elektrischen Leitungen sichergestellt werden, so dass eine wirksame elektrische, bzw. elektromagnetische Entkopplung zwischen den entsprechenden elektrischen Leitungen sichergestellt wird.

Das elastische Dämpfungselement 100 gemäß der in Fig. 1 dargestellten ersten Ausführungsform umfasst einen elastischen Hülsenring 101 zum Umschließen der in Fig. 1 nicht dargestellten Leitung. Der elastische Hülsenring 101 ist hierbei insbesondere als ein ringförmig ausgebildeter und umlaufend geschlossener elastischer Hülsenring 101 ausgebildet. Der elastische Hülsenring 101 weist eine der Leitung zugewandte Innenwandung 103 auf, welche einen Hülsenringinnenraum 104 zum Aufnehmen der Leitung umschließt.

In der Innenwandung 103 ist eine Mehrzahl von sich radial erstreckenden Ausnehmungen 105 geformt. Zwischen zwei nebeneinander in der Innenwandung 103 geformten Ausnehmungen 105 ist jeweils ein sich in Richtung des Hülsenringinnenraums 104 erstreckender gekrümmter und spitz zulaufender Steg 107 geformt.

Die Stege 107 liegen umlaufend an der in dem Hülsenringinnenraum 104 aufgenommenen und in Fig. 1 nicht dargestellten Leitung an und dienen zum Abfangen von Stößen und Schwingungen der von dem elastischen Dämpfungselement 100 umschlossenen Leitung.

Der elastische Hülsenring 101, und insbesondere auch die Stege 107 umfassen einen Elastomer-Kunststoff insbesondere Ethylen-Propylen-Dien-Kautschuk (EPDM), Nitrilkautschuk (NBR), Silikon, thermoplastisches Elastomer (TPE) und/oder Polyvinylchlorid (PVC). Der Elastomer-Kunststoff weist insbesondere eine Shore-Härte zwischen 50 und 100 ShoreA, insbesondere zwischen 70 und 100 ShoreA auf, wodurch eine besonders wirksame elastische Verformbarkeit des elastischen Hülsenrings 101, insbesondere der Stege 107, gewährleistet werden kann. Die Shore-Härte wird hierbei nach der Norm DIN ISO 7619-1 bestimmt.

Wie aus der Fig. 1 zu entnehmen ist, sind die in Umlaufrichtung 109 nebeneinander an der Innenwandung 103 angeordneten Stege 107 somit jeweils durch eine Ausnehmung 105 voneinander getrennt.

Die Stege 107 sind hierbei in dieselbe Umlaufrichtung 109 gekrümmt geformt.

Die Stege 107 weisen hierbei jeweils eine erste gekrümmte Stegseitenwand 111 auf, welche einer ersten Ausnehmung 105-1 der beiden nebeneinander in der Innenwandung 103 geformten Ausnehmungen 105 zugewandt ist. Die Stege 107 weisen jeweils eine zweite gekrümmte Stegseitenwand 113 auf, welche einer zweiten Ausnehmung 105-2 der beiden nebeneinander in der Innenwandung 103 geformten Ausnehmungen 105 zugewandt ist.

Wie in der Fig. 1 dargestellt ist, sind die erste gekrümmte Stegseitenwand 111 und die zweite gekrümmte Stegseitenwand 113 in dieselbe Krümmungsrichtung 115 gekrümmt, so dass die Stege 107 in dieselbe Richtung einfedern können.

Hierbei ist insbesondere die erste gekrümmte Stegseitenwand 111 des jeweiligen Stegs 107 als eine erste konkav gekrümmte Stegseitenwand 111 geformt, und ist insbesondere die zweite gekrümmte Stegseitenwand 113 des jeweiligen Stegs 107 als eine zweite konvex gekrümmte Stegseitenwand 113 geformt.

Hierbei ist jeweils eine Stegspitze 117 des jeweils radial in Richtung des Hülsenringinnenraums 104 gekrümmt und spitz zulaufenden Stegs 107 ausgebildet, an der in dem Hülsenringinnenraum 104 aufgenommenen Leitung anzuliegen. Die jeweilige Stegspitze 117 ist hierbei insbesondere ausgebildet, durch die an der Stegspitze 117 anliegende und in Fig. 1 nicht dargestellte Leitung, zumindest abschnittsweise radial in Richtung der Innenwandung 103 verlagert zu werden, um eine Anpresskraft auf die Leitung auszuüben.

Somit stellen die Stege 107 eine wirksame Klemmwirkung auf die in dem Hülsenringinnenraum 104 aufgenommene Leitung sicher.

Die gekrümmt ausgebildeten Stege 107 können insbesondere auch wie folgt definiert werden.

Eine in Fig. 1 dargestellte Radialrichtungsachse 119 des jeweiligen Stegs 107 erstreckt sich von einem Mittelpunkt 121 einer Grundfläche 123 des jeweiligen Stegs 107 zu einer Hülsenmittelachse 125 des elastischen Hülsenrings 101.

Der jeweilige Steg 107 weist hierbei eine Stegmittelachse 127 auf, welche sich von der Stegspitze 117 des jeweiligen Stegs 107 zu dem Mittelpunkt 121 der Grundfläche 123 des jeweiligen Stegs 107 erstreckt.

Wie aus der Fig. 1 zu entnehmen ist, bedingt die gekrümmte Form des jeweiligen Stegs 107, dass sich die jeweilige Stegmittelachse 127 winklig zu der jeweiligen Radialrichtungsachse 119 erstreckt.

Zudem erstreckt sich der jeweilige Steg 107 entlang einer Steglängsachse 129, welche sich parallel zu einer in Fig. 1 nicht dargestellten Leitungslängsrichtung der durch den elastischen Hülsenring 101 umschließbaren Leitung erstreckt, wobei die Steglängsachse 129 auch parallel zu der in Fig. 1 dargestellten Hülsenmittelachse 125 verläuft.

Hierbei sind die jeweilige erste gekrümmte Stegseitenwand 111 und die zweite gekrümmte Stegseitenwand 113 jeweils um eine sich parallel zu der jeweiligen Steglängsachse 129 erstreckende erste und zweiten Krümmungsachse 131 und 133 gekrümmt, wobei die jeweilige Krümmungsachse 131, 133 gegenüber der jeweiligen Steglängsachse 129 entlang einer Umlaufrichtung 109 des elastischen Hülsenrings 101 verlagert ist.

Durch den elastischen Hülsenring 101 mit den Stegen 107 kann somit eine wirksame Aufnahme und Fixierung der Leitung in dem elastischen Hülsenring 101 sichergestellt werden und eine vorteilhafte Dämpfung von Vibrationen in der Leitung ermöglicht werden.

Wie aus der Fig. 1 ferner hervorgeht, weist der elastische Hülsenring 101 eine der Leitung abgewandte Außenwandung 135 auf, wobei an der Außenwandung 135 eine Mehrzahl von sich radial erstreckenden Außenstegen 137 geformt ist, welche ausgebildet sind, eine Abstandshaltung zu in Fig. 1 nicht dargestellten außerhalb des elastischen Dämpfungselements 100 angeordneten Bauteilen sicherzustellen.

Die Außenstege 137 sind hierbei insbesondere nebeneinander in Umlaufrichtung 109 an der Außenwandung 135 angeordnet, wobei insbesondere zwei in Umlaufrichtung 109 an der Außenwandung 135 nebeneinander angeordnete Außenstege 137 durch jeweils eine Außenstegausnehmung 139 voneinander beabstandet sind.

Die Außenstege 137 weisen jeweils eine dem Hülsenringinnenraum 104 abgewandte Außenstegoberseite 141, insbesondere eine gerade geformte Außenstegoberseite 141, auf. Die Außenstege 137 weisen jeweils eine erste Außenstegseitenwand 143-1, insbesondere eine gekrümmt geformte erste Außenstegseitenwand 143-1 auf, welche einer ersten Außenstegausnehmung 139-1 der beiden Außenstegausnehmungen 139 zugewandt ist. Die Außenstege 137 weisen jeweils eine zweite Außenstegseitenwand 143-2 auf, insbesondere eine gekrümmt geformte zweite Außenstegseitenwand 143-2, welche einer zweiten Außenstegausnehmung 139-2 der beiden Außenstegausnehmungen 139 zugewandt ist.

Durch die Außenstege 137 wird sichergestellt, dass eine wirksame dämpfende Beabstandung zu außerhalb des elastischen Dämpfungselements 100 angeordneten Bauteilen erreicht wird.

Es wird betont, dass die an der Außenwandung 135 angeordneten Außenstege 137 lediglich optional sind, so dass es innerhalb des Umfang des in der Fig. 1 gezeigten Ausführungsbeispiels gemäß der ersten Ausführungsform liegt, ein elastisches Dämpfungselement 100 ohne Außenstege 137 bereitzustellen.

Unabhängig davon können die in Fig. 1 gezeigten Außenstege 137 beliebige Formen umfassen, und beispielsweise auch eine gerade erste und/oder zweite Außenstegseitenwand 143-1, 143-2 aufweisen. Unabhängig davon können die in Fig. 1 gezeigten Außenstege 137 auch als nach außen spitz zulaufende Außenstege 137 geformt sein, welche somit statt der Außenstegoberseite 141 eine Außenstegspitze aufweisen.

Unabhängig davon können alternativ oder zusätzlich zu den in Fig. 1 gezeigten Außenstegen 137 an der Außenwandung 135 auch als Vertiefungen ausgebildete Außenrillen angeordnet sein.

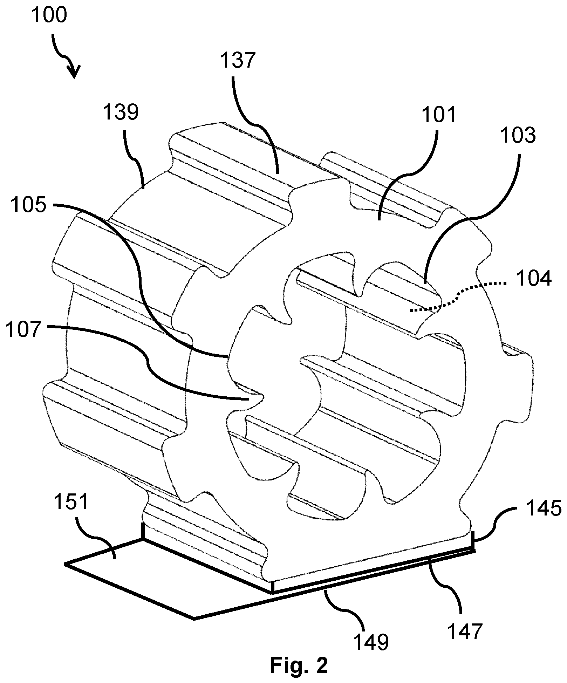

Fig. 2 zeigt eine Seitenansicht eines elastischen Dämpfungselements gemäß einer zweiten Ausführungsform.

Das in Fig. 2 dargestellte elastische Dämpfungselement 100 entspricht dem in Fig. 1 dargestellten elastischen Dämpfungselement 100 bis darauf, dass an der Außenwandung 135 des elastischen Hülsenrings 101 ein Klebeelement 145 angeordnet ist, welches ausgebildet ist, das elastische Dämpfungselement 100 mit einem weiteren in Fig. 2 nicht dargestellten Bauteil durch eine Klebeverbindung zu verbinden.

Das Klebeelement 145 weist hierbei eine Klebeoberfläche 147 auf, welche durch ein lösbar mit der Klebeoberfläche 147 verbundenes Abziehelement 149 abgedeckt ist, wobei das lösbar mit der Klebeoberfläche 147 verbundene Abziehelement 149 ausgebildet ist, von der Klebeoberfläche 147 entfernt zu werden, um die Klebeoberfläche 147 zum Bereitstellen der Klebeverbindung mit dem weiteren Bauteil freizulegen. Das Abziehelement 149 weist hierbei insbesondere einen Greifabschnitt 151 auf, welcher von der Außenwandung 135 absteht und durch einen Nutzer des elastischen Dämpfungselements 100 ergriffen werden kann, um das Abziehelement 149 von der Klebeoberfläche 147 abzuziehen und damit die Klebeoberfläche 147 freizulegen.

Ist die Klebeoberfläche 147 des Klebeelements 145 freigelegt, kann die Klebeoberfläche 147 mit dem in Fig. 2 nicht dargestellten weiteren Bauteil verklebt werden.

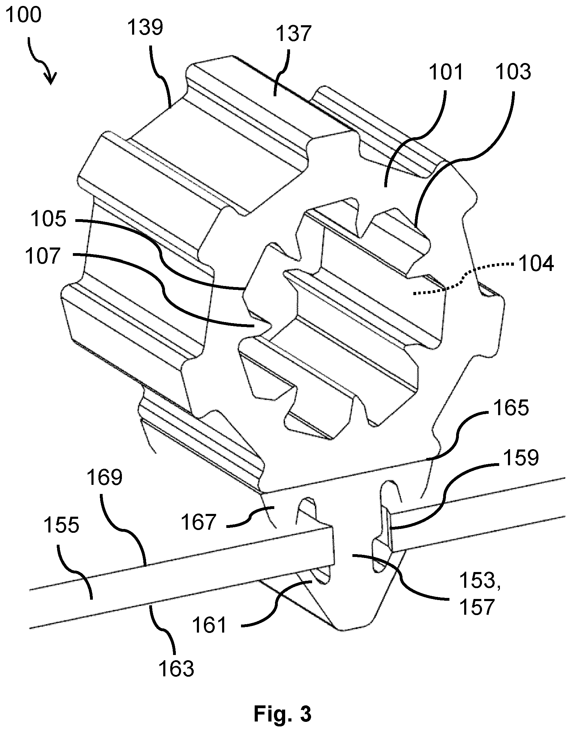

Fig. 3 zeigt eine Seitenansicht eines elastischen Dämpfungselements gemäß einer dritten Ausführungsform.

Das in Fig. 3 dargestellte elastischen Dämpfungselement 100 entspricht dem in Fig. 1 dargestellten elastischen Dämpfungselement 100 bis darauf, dass an der Außenwandung 135 ein Befestigungselement 153 angeordnet ist, welcher sich radial von der Außenwandung 135 erstreckt und ausgebildet ist, das elastische Dämpfungselement 100 mit einem zusätzlichen Bauteil 155 steckbar zu verbinden. Das Befestigungselement 153 ist hierbei insbesondere als eine Befestigungsrippe ausgebildet, welche insbesondere einstückig mit der Außenwandung 135 des elastischen Dämpfungselements 100 ausgebildet ist. Die Befestigungsrippe erstreckt sich hierbei an der Außenwandung 135 insbesondere parallel zu der in Fig. 3 nicht dargestellten Hülsenmittelachse 125 des elastischen Hülsenrings 101. Das Befestigungselement 153 weist hierbei einen Befestigungsschaft 157 auf, welcher mit der Außenwandung 135 des elastischen Hülsenrings 101 verbunden ist, und welcher sich von der Außenwandung 135 aus in Richtung des zusätzlichen Bauteils 155 erstreckt und ausgebildet ist, durch eine Befestigungsöffnung 159 des zusätzlichen Bauteils 155 durchgeführt zu werden.

Da das Befestigungselement 153 insbesondere als eine Befestigungsrippe ausgebildet ist, ist die entsprechende Befestigungsöffnung 159 des zusätzlichen Bauteils 155 insbesondere als ein Langloch ausgebildet, durch welche der rippenartig geformte Befestigungsschaft 157 des als Befestigungsrippe ausgebildeten Befestigungselements 153 durchführbar ist.

An dem Befestigungsschaft 157 ist zumindest ein Befestigungsvorsprung 161 angeordnet, welcher ausgebildet ist, an einer dem elastischen Dämpfungselement 100 abgewandten Seite 163 des zusätzlichen Bauteils 155 anzuliegen, um eine wirksame Befestigung des Befestigungselements 153 an dem zusätzlichen Bauteil 155 sicherzustellen.

Die Außenwandung 135 des elastischen Hülsenrings 101 weist ferner eine dem zusätzlichen Bauteil 155 zugewandte Kontaktfläche 165 auf, wobei an der Kontaktfläche 165 ein Anlageelement 167, insbesondere eine Anlagenrippe, angeordnet ist, welches ausgebildet an einer dem elastischen Dämpfungselement 100 zugewandten Wandung 169 des zusätzlichen Bauteils 155 anzuliegen.

Somit ermöglicht das Befestigungselement 153 eine wirksame Befestigung des elastischen Dämpfungselements 100 an dem zusätzlichen Bauteil 155 und das Anlageelement 167 stellt eine wirksame dämpfende Beabstandung zwischen dem elastischen Dämpfungselement 100 und dem zusätzlichen Bauteil 155 sicher.

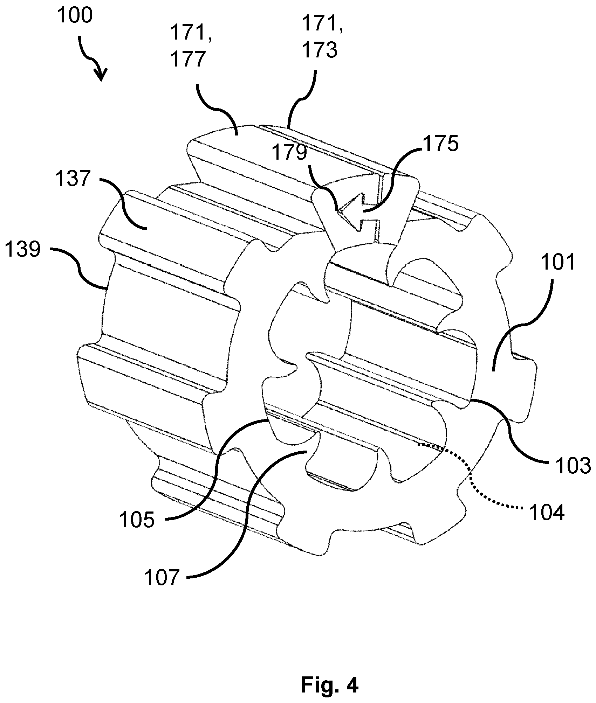

Fig. 4 zeigt eine Seitenansicht eines elastischen Dämpfungselements gemäß einer vierten Ausführungsform in einer geschlossenen Stellung.

Das in Fig. 4 dargestellte elastischen Dämpfungselement 100 entspricht dem in Fig. 1 dargestellten elastischen Dämpfungselement 100 bis darauf, dass der elastische Hülsenring 101 nicht als ein geschlossener elastischer Hülsenring 101, sondern als ein verschließbarer elastischer Hülsenring 101 ausgebildet ist, welcher geöffnet und auch wieder verschlossen werden kann, um die Leitung aufzunehmen.

Hierbei weist der elastische Hülsenring 101 einen Verschlussabschnitt 171 zum Schließen des elastischen Hülsenrings 101 um die Leitung auf. Insbesondere ist an einem ersten Bereich 173 des Verschlussabschnitts 171 ein Widerhaken 175 gebildet. Insbesondere ist an einem zweiten Bereich 177 des Verschlussabschnitts 171 eine Aufnahmeöffnung 179 zum Aufnehmen des Widerhakens 175 gebildet.

Dadurch entsteht ein integraler und einstückiger Verschlussabschnitt 171 in dem elastischen Hülsenring 101, der es erlaubt, dass das elastische Dämpfungselement 100 an beliebigen Stellen auf die Leitung aufgesetzt und verschlossen werden kann. Beim Schließen des elastischen Dämpfungselements 100 wird der Widerhaken 175 in die Aufnahmeöffnung 179 gedrückt. Dadurch werden die Stege 107 an die Leitung angelegt. In diesem Fall wird das elastische Dämpfungselement 100 nicht entlang der Leitung verschoben, sondern an einer vorgesehenen Stelle angelegt. Der Verschlussabschnitt 171 kann einen Thermoplast- oder Elastomer-Kunststoff umfassen, und insbesondere aus einem EPDM, NBR, Silikon, TPE und/oder PVC gebildet sein. Der Elastomer-Kunststoff weist insbesondere eine Shore-Härte zwischen 50 und 110, insbesondere zwischen 80 und 100 auf, wodurch eine besonders stabile Anordnung des Verschlussabschnitts 171 gewährleistet werden kann. Die Shore-Härte wird hierbei nach der Norm DIN ISO 7619-1 bestimmt.

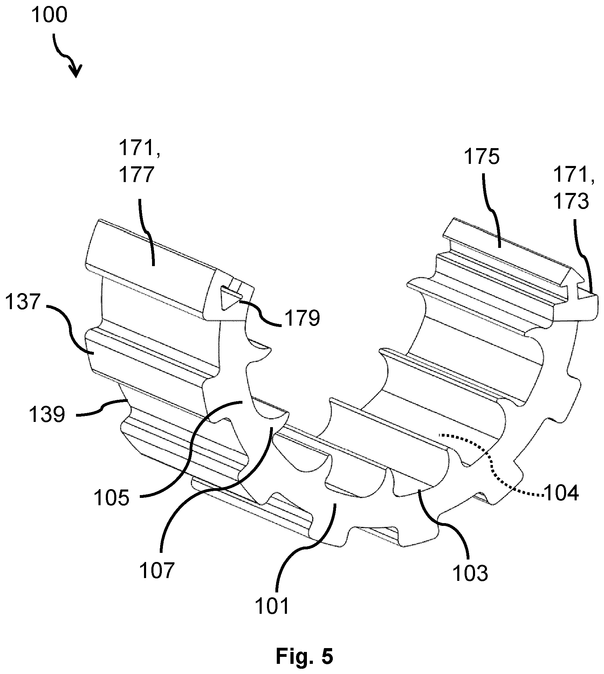

Fig. 5 zeigt eine Seitenansicht des elastischen Dämpfungselements gemäß der vierten Ausführungsform in einer geöffneten Stellung.

Wie in der Fig. 5 dargestellt ist, ist der Widerhaken 175 in der geöffneten Stellung nicht in der Aufnahmeöffnung 179 aufgenommen, und der elastische Hülsenring 101 des elastischen Dämpfungselements 100 befindet sich in einer aufgespreizten Position um ein wirksames Aufnehmen der Leitung sicherzustellen. Ist die Leitung innerhalb des in Fig. 5 dargestellten geöffneten elastischen Hülsenrings 101 positioniert kann anschließend der elastische Hülsenring 101 geschlossen werden und der Widerhaken 175 kann in der Aufnahmeöffnung 179 aufgenommen werden, um die Leitung gemäß der in Fig. 4 dargestellten geschlossenen Stellung wirksam zu umschließen.

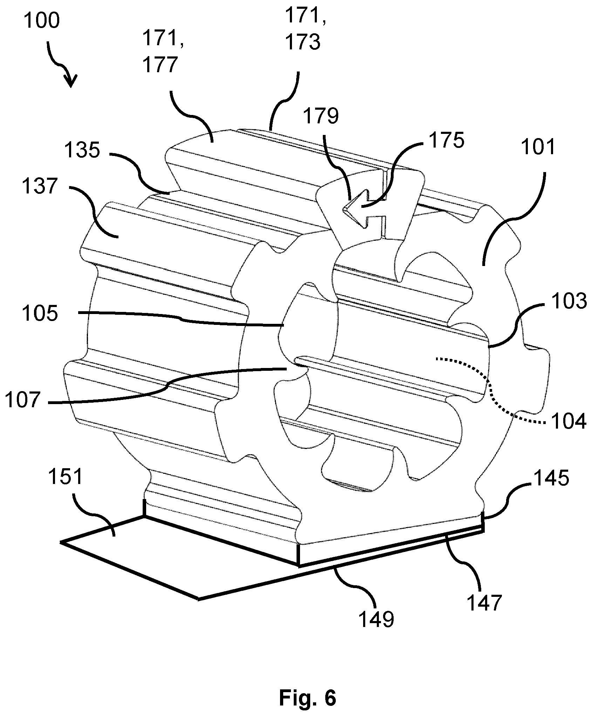

Fig. 6 zeigt eine Seitenansicht eines elastischen Dämpfungselements gemäß einer fünften Ausführungsform.

Das elastische Dämpfungselement 100 gemäß der in Fig. 6 gezeigten fünften Ausführungsform entspricht dem elastischen Dämpfungselement 100 gemäß der in Fig. 4 und Fig. 5 gezeigten vierten Ausführungsform, bis darauf, dass an der Außenwandung 135 des elastischen Hülsenrings 101 ein Klebeelement 145 angeordnet ist, welches ausgebildet ist, das elastische Dämpfungselement 100 mit einem weiteren in Fig. 6 nicht dargestellten Bauteil durch eine Klebeverbindung zu verbinden. Für weiteren Details in Bezug auf das Klebelement 145 wird auf die Ausführungen zur Fig. 2 verwiesen.

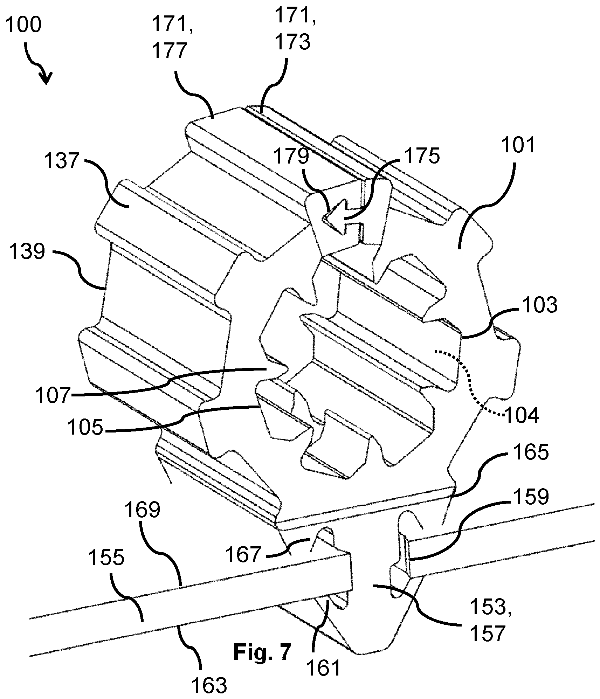

Fig. 7 zeigt eine Seitenansicht eines elastischen Dämpfungselements gemäß einer sechsten Ausführungsform.

Das elastische Dämpfungselement 100 gemäß der in Fig. 7 gezeigten sechsten Ausführungsform entspricht dem elastischen Dämpfungselement 100 gemäß der in Fig. 4 und Fig. 5 gezeigten vierten Ausführungsform, bis darauf, dass an der Außenwandung 135 ein Befestigungselement 153 angeordnet ist, welcher sich radial von der Außenwandung 135 erstreckt und ausgebildet ist, das elastische Dämpfungselement 100 mit einem zusätzlichen Bauteil 155 steckbar zu verbinden. Für weitere Details in Bezug auf das als Befestigungsrippe ausgebildete Befestigungselement 153 wird auf die Ausführungen zur dritten Ausführungsbeispiel gemäß der Fig. 3 verwiesen.

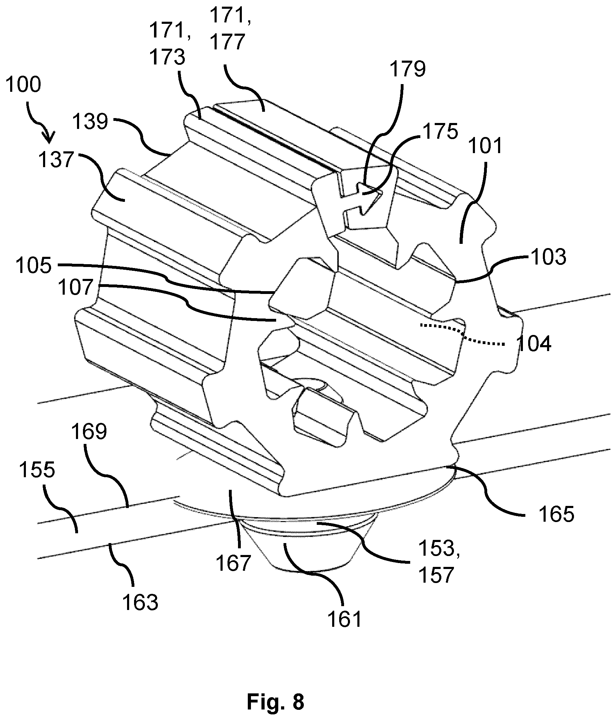

Fig. 8 zeigt eine Seitenansicht eines elastischen Dämpfungselements gemäß einer siebten Ausführungsform.

Das elastische Dämpfungselement 100 gemäß der in Fig. 8 gezeigten siebten Ausführungsform unterscheidet sich von dem elastischen Dämpfungselement 100 gemäß der in Fig. 7 gezeigten sechsten Ausführungsform, dadurch, dass das Befestigungselement 153 nicht als eine Befestigungsrippe, sondern als ein Befestigungsstift ausgebildet ist. Insbesondere ist der Befestigungsstift nicht einstückig mit der Außenwandung 135 ausgebildet, sondern ist der Befestigungsstift als ein zusätzliches Bauteil ausgebildet, welches mit der Außenwandung 135 verbunden ist, beispielsweise dadurch, dass in der Außenwandung 135 ein gestanztes Loch, insbesondere Rundloch, vorgesehen ist, in welches der Befestigungsstift eingesetzt ist, insbesondere durch eine Clipverbindung.

Da das Befestigungselement 153 insbesondere als ein Befestigungsstift ausgebildet ist, ist die entsprechende Befestigungsöffnung 159 des zusätzlichen Bauteils 155 insbesondere als ein Rundloch ausgebildet, durch welche der Befestigungsschaft 157 des als Befestigungsstift ausgebildeten Befestigungselements 153 durchführbar ist.

Das elastische Dämpfungselement 100 gemäß der in Fig. 8 gezeigten siebten Ausführungsform entspricht dem elastischen Dämpfungselement 100 gemäß der in Fig. 7 gezeigten sechsten Ausführungsform, bis darauf, dass das an der Kontaktfläche 165 anliegende Anlageelement 167 einen Anlagering umfasst, welcher ausgebildet an der Wandung 169 des zusätzlichen Bauteils 155 anzuliegen. Für weitere Details wird auf die vorangegangenen Ausführungen verwiesen.

Alle in Verbindung mit einzelnen Ausführungsformen erläuterten und gezeigten Merkmale können in unterschiedlicher Kombination in dem erfindungsgemäßen Gegenstand vorgesehen sein, um gleichzeitig deren vorteilhafte Wirkungen zu realisieren, solange der Schutzumfang der Ansprüche nicht verlassen wird.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Elastisches Dämpfungselement
- 101: Elastischer Hülsenring
- 103: Innenwandung
- 104: Hülsenringinnenraum
- 105: Ausnehmung
- 105-1: Erste Ausnehmung
- 105-2: Zweite Ausnehmung
- 107: Steg
- 109: Umlaufrichtung
- 111: Erste gekrümmte Stegseitenwand
- 113: Zweite gekrümmte Stegseitenwand
- 115: Krümmungsrichtung
- 117: Stegspitze
- 119: Radialrichtungsachse
- 121: Mittelpunkt einer Grundfläche des Stegs
- 123: Grundfläche des Stegs
- 125: Hülsenmittelachse des elastischen Hülsenrings
- 127: Stegmittelachse des Stegs
- 129: Steglängsachse
- 131: Erste Krümmungsachse
- 133: Zweite Krümmungsachse
- 135: Außenwandung
- 137: Außenstege
- 139: Außenstegausnehmung
- 139-1: Erste Außenstegausnehmung
- 139-2: Zweite Außenstegausnehmung
- 141: Außenstegoberseite
- 143-1: Erste Außenstegseitenwand
- 143-2: Zweite Außenstegseitenwand
- 145: Klebeelement
- 147: Klebeoberfläche
- 149: Abziehelement
- 151: Greifabschnitt
- 153: Befestigungselement
- 155: Zusätzliches Bauteil
- 157: Befestigungsschaft
- 159: Befestigungsöffnung des zusätzlichen Bauteils
- 161: Befestigungsvorsprung
- 163: Abgewandte Seite des zusätzlichen Bauteils
- 165: Kontaktfläche
- 167: Anlageelement
- 169: Wandung des zusätzlichen Bauteils
- 171: Verschlussabschnitt
- 173: Erster Bereich des Verschlussabschnitts
- 175: Widerhaken
- 177: Zweiter Bereich des Verschlussabschnitts
- 179: Aufnahmeöffnung

## Patentansprüche

1. Elastisches Dämpfungselement (100) zum Dämpfen von Vibrationen einer Leitung, mit:
einem elastischen Hülsenring (101) zum Umschließen der Leitung, wobei der elastische Hülsenring (101) eine der Leitung zugewandte Innenwandung (103) aufweist, welche einen Hülsenringinnenraum (104) zum Aufnehmen der Leitung umschließt,
wobei in der Innenwandung (103) eine Mehrzahl von sich radial erstreckenden Ausnehmungen (105, 105-1, 105-2) geformt ist, wobei zwischen zwei nebeneinander in der Innenwandung (103) geformten Ausnehmungen (105, 105-1, 105-2) jeweils ein sich in Richtung des Hülsenringinnenraums (104) erstreckender gekrümmter und spitz zulaufender Steg (107) geformt ist,
wobei der elastische Hülsenring (101) eine der Leitung abgewandte Außenwandung (135) aufweist, wobei an der Außenwandung (135) ein Befestigungselement (153) angeordnet ist, welches sich radial von der Außenwandung (135) erstreckt und ausgebildet ist, das elastische Dämpfungselement (100) mit einem zusätzlichen Bauteil (155) steckbar zu verbinden, wobei das Befestigungselement (153) einen Befestigungsschaft (157) aufweist, welcher mit der Außenwandung (135) des elastischen Hülsenrings (101) verbunden ist, und welcher sich von der Außenwandung (135) aus in Richtung des zusätzlichen Bauteils (155) erstreckt und ausgebildet ist, durch eine Befestigungsöffnung (159) des zusätzlichen Bauteils (155) durchgeführt zu werden, und wobei an dem Befestigungsschaft (157) zumindest ein Befestigungsvorsprung (161) angeordnet ist, welcher ausgebildet ist, an einer dem elastischen Dämpfungselement (100) abgewandten Seite des zusätzlichen Bauteils (155) anzuliegen, um eine wirksame Befestigung des Befestigungselements (153) an dem zusätzlichen Bauteil (155) sicherzustellen,
wobei die Außenwandung (135) des elastischen Hülsenrings (101) eine dem zusätzlichen Bauteil (155) zugewandte Kontaktfläche (165) aufweist, wobei an der Kontaktfläche (165) ein Anlageelement (167) angeordnet ist, welches ausgebildet ist, an einer dem elastischen Hülsenring (101) zugewandten Wandung (169) des zusätzlichen Bauteils (155) anzuliegen, und
wobei der elastische Hülsenring (101) des elastischen Dämpfungselements (100) als ein in Umlaufrichtung (109) des elastischen Hülsenrings (101) geschlossener Hülsenring oder als ein in Umlaufrichtung (109) des elastischen Hülsenrings (101) verschließbarer Hülsenring geformt ist.

2. Elastisches Dämpfungselement (100) nach Anspruch 1, wobei die Stege (107) in dieselbe Umlaufrichtung (109) gekrümmt geformt sind.

3. Elastisches Dämpfungselement (100) nach Anspruch 1 oder 2, wobei der jeweilige Steg (107) eine erste gekrümmte Stegseitenwand (111) aufweist, welche einer ersten Ausnehmung (105, 105-1) der beiden nebeneinander in der Innenwandung (103) geformten Ausnehmungen (105, 105-1, 105-2) zugewandt ist, und wobei der jeweilige Steg (107) eine zweite gekrümmte Stegseitenwand (113) aufweist, welche einer zweiten Ausnehmung (1ß5, 105-2) der beiden nebeneinander in der Innenwandung (103) geformten Ausnehmungen (105, 105-1, 105-2) zugewandt ist,
wobei insbesondere die erste gekrümmte Stegseitenwand (111) des jeweiligen Stegs (107) als eine erste konkav gekrümmte Stegseitenwand (111) geformt ist, und wobei insbesondere die zweite gekrümmte Stegseitenwand (113) des jeweiligen Stegs (107) als eine zweite konvex gekrümmte Stegseitenwand (113) geformt ist.

4. Elastisches Dämpfungselement (100) nach Anspruch 3, wobei sich der jeweilige Steg (107) entlang einer Steglängsachse (129) erstreckt, welche sich parallel zu einer Leitungslängsrichtung der durch den elastischen Hülsenring (101) umschließbaren Leitung erstreckt,
wobei die erste gekrümmte Stegseitenwand (111) und die zweite gekrümmte Stegseitenwand (113) jeweils um eine sich parallel zu der jeweiligen Steglängsachse (129) erstreckende erste und zweite Krümmungsachse (131, 133) gekrümmt sind, wobei die jeweilige Krümmungsachse (131, 133) gegenüber der jeweiligen Steglängsachse (129) entlang einer Umlaufrichtung (109) des elastischen Hülsenrings (101) verlagert ist.

5. Elastisches Dämpfungselement (100) nach einem der vorangehenden Ansprüche, wobei eine Stegspitze (117) des jeweils radial in Richtung des Hülsenringinnenraums (104) gekrümmt und spitz zulaufenden Stegs (107) ausgebildet ist, an einer in dem Hülsenringinnenraum (104) aufgenommenen Leitung anzuliegen, wobei die jeweilige Stegspitze (117) insbesondere ausgebildet ist, durch die an der Stegspitze (117) anliegende Leitung, zumindest abschnittsweise radial in Richtung der Innenwandung (103) verlagert zu werden, um eine Anpresskraft auf die Leitung bereitzustellen.

6. Elastisches Dämpfungselement (100) nach einem der vorangehenden Ansprüche, wobei sich jeweils eine Radialrichtungsachse (119) des jeweiligen Stegs (107) von einem Mittelpunkt (121) einer Grundfläche (123) des jeweiligen Stegs (107) zu einer Hülsenmittelachse (125) des elastischen Hülsenrings (101) erstreckt,
wobei der jeweilige Steg (107) eine Stegmittelachse (127) aufweist, welche sich von einer Stegspitze (117) des jeweiligen radial in Richtung des Hülsenringinnenraums (104) des elastischen Hülsenrings (101) radial spitz zulaufender Stegs (107) zu dem Mittelpunkt (121) der Grundfläche (123) des jeweiligen Stegs (107) erstreckt, und
wobei sich die jeweilige Stegmittelachse (127) winklig zu der jeweiligen Radialrichtungsachse (119) erstreckt.

7. Elastisches Dämpfungselement (100) nach einem der vorangehenden Ansprüche, wobei an der Außenwandung (135) eine Mehrzahl von sich radial erstreckenden Außenstegen (137) geformt ist, welche ausgebildet sind, eine Abstandshaltung zu außerhalb des elastischen Dämpfungselements (100) angeordneten Bauteilen sicherzustellen, wobei die Außenstege (137) insbesondere nebeneinander in Umlaufrichtung (109) des elastischen Hülsenrings (101) an der Außenwandung (135) angeordnet sind, und wobei insbesondere zwei in Umlaufrichtung (109) an der Außenwandung (135) nebeneinander angeordnete Außenstege (137) durch jeweils eine Außenstegausnehmung (139, 139-1, 139-2) voneinander beabstandet sind.

8. Elastisches Dämpfungselement (100) nach Anspruch 7, wobei die jeweiligen Außenstege (137) jeweils eine dem Hülsenringinnenraum (104) abgewandte Außenstegoberseite (141), insbesondere eine gerade geformte Außenstegoberseite (141), aufweisen, wobei die Außenstege (137) jeweils eine erste Außenstegseitenwand (143-1), insbesondere eine gekrümmt geformte erste Außenstegseitenwand (143-1) aufweisen, welche einer ersten Außenstegausnehmung (139-1) der beiden Außenstegausnehmungen (139, 139-1, 139-2) zugewandt ist, und/oder wobei die Außenstege (137) jeweils eine zweite Außenstegseitenwand (143-2), insbesondere eine gekrümmt geformte zweite Außenstegseitenwand (143-2) aufweisen, welche einer zweiten Außenstegausnehmung (139-2) der beiden Außenstegausnehmungen (139, 139-1, 139-2) zugewandt ist.

9. Elastisches Dämpfungselement (100) nach einem der vorangehenden Ansprüche, wobei der elastische Hülsenring (101) einen Verschlussabschnitt (171) zum Schließen des elastischen Hülsenrings (101) um die Leitung aufweist, wobei insbesondere an einem ersten Bereich (173) des Verschlussabschnitts (171) ein Widerhaken (175) gebildet ist, und wobei insbesondere an einem zweiten Bereich (177) des Verschlussabschnitts (171) eine Aufnahmeöffnung (179) zum Aufnehmen des Widerhakens (175) gebildet ist.

10. Elastisches Dämpfungselement (100) nach einem der vorangehenden Ansprüche, wobei das Anlageelement (167) eine Anlagenrippe und/oder ein Anlagering ist, welches ausgebildet ist, an einer dem elastischen Hülsenring (101) zugewandten Wandung (169) des zusätzlichen Bauteils (155) anzuliegen.

11. Elastisches Befestigungssystem (200) mit einem elastischen Dämpfungselement (100) nach einem der vorangehenden Ansprüche und einer Leitung, welche in dem durch die Innenwandung (103) des elastischen Hülsenrings (101) umschlossenen Hülsenringinnenraum (104) aufgenommen ist.

## Claims

1. Elastic damping element (100) for damping vibrations of a line, comprising:
an elastic sleeve ring (101) for enclosing the line, wherein the elastic sleeve ring (101) comprises an inner wall (103) facing the line, which encloses a sleeve ring interior space (104) for receiving the line,
wherein a plurality of radially extending recesses (105, 105-1, 105-2) are formed in the inner wall (103), wherein a curved and tapered web (107) extending in the direction of the sleeve ring interior space (104) is formed between two recesses (105, 105-1, 105-2) formed next to each other in the inner wall (103),
wherein the elastic sleeve ring (101) comprises an outer wall (135) facing away from the line, wherein a fastening element (153) is arranged at the outer wall (135), which fastening element (153) extends radially from the outer wall (135) and is adapted to connect the elastic damping element (100) to an additional component (155) in a pluggable manner, wherein the fastening element (153) comprises a fastening shaft (157), which is connected to the outer wall (135) of the elastic sleeve ring (101) and which extends from the outer wall (135) in the direction of the additional component (155) and is adapted to be passed through a fastening opening (159) of the additional component (155), and wherein at least one fastening projection (161) is arranged at the fastening shaft (157), which at least one fastening projection (161) is adapted to abut at a side of the additional component (155) facing away from the elastic damping element (100) in order to ensure an effective attachment of the fastening element (153) to the additional component (155),
wherein the outer wall (135) of the elastic sleeve ring (101) comprises a contact surface (165) facing the additional component (155), wherein a contact element (167) is arranged at the contact surface (165), which contact element (167) is adapted to abut at a wall (169) of the additional component (155) facing the elastic sleeve ring (101), and
wherein the elastic sleeve ring (101) of the elastic damping element (100) is formed as a sleeve ring closed in the circumferential direction (109) of the elastic sleeve ring (101) or as a sleeve ring closable in the circumferential direction (109) of the elastic sleeve ring (101).

2. Elastic damping element (100) according to claim 1, wherein the webs (107) are curved in the same circumferential direction (109).

3. Elastic damping element (100) according to claim 1 or 2, wherein the respective web (107) comprises a first curved web side wall (111), which faces a first recess (105, 105-1) of the two recesses (105, 105-1, 105-2) formed next to each other in the inner wall (103), and wherein the respective web (107) comprises a second curved web side wall (113), which faces a second recess (105, 105-2) of the two recesses (105, 105-1, 105-2) formed next to each other in the inner wall (103),
wherein in particular the first curved web side wall (111) of the respective web (107) is formed as a first concavely curved web side wall (111), and wherein in particular the second curved web side wall (113) of the respective web (107) is formed as a second convexly curved web side wall (113).

4. Elastic damping element (100) according to claim 3, wherein the respective web (107) extends along a web longitudinal axis (129), which extends parallel to a line longitudinal direction of the line enclosable by the elastic sleeve ring (101),
wherein the first curved web side wall (111) and the second curved web side wall (113) are each curved about a first and second axes of curvature (131, 133) extending parallel to the respective web longitudinal axis (129), wherein the respective axis of curvature (131, 133) is displaced relative to the respective web longitudinal axis (129) along a circumferential direction (109) of the elastic sleeve ring (101).

5. Elastic damping element (100) according to one of the preceding claims, wherein a web tip (117) of the web (107), which is curved and tapered radially in the direction of the sleeve ring interior space (104), is adapted to abut at a line received in the sleeve ring interior space (104), wherein the respective web tip (117) in particular is adapted to be displaced at least in sections radially in the direction of the inner wall (103) by the line abutting against the web tip (117) in order to provide a contact force on the line.

6. Elastic damping element (100) according to one of the preceding claims, wherein a radial direction axis (119) of the respective web (107) extends from a center point (121) of a base surface (123) of the respective web (107) to a sleeve center axis (125) of the elastic sleeve ring (101),
wherein the respective web (107) comprises a web center axis (127), which extends from a web tip (117) of the respective web (107) tapering radially in the direction of the sleeve ring interior space (104) of the elastic sleeve ring (101) to the center point (121) of the base surface (123) of the respective web (107), and
wherein the respective web center axis (127) extends at an angle to the respective radial direction axis (119).

7. Elastic damping element (100) according to one of the preceding claims, wherein a plurality of radially extending outer webs (137) are formed at the outer wall (135), which outer webs (137) are adapted to ensure a spacing from components arranged outside the elastic damping element (100), wherein the outer webs (137) are in particular arranged next to each other in the circumferential direction (109) of the elastic sleeve ring (101) at the outer wall (135), and wherein in particular two outer webs (137) arranged next to each other in the circumferential direction (109) at the outer wall (135) are spaced apart from each other by a respective outer web recess (139, 139-1, 139-2).

8. Elastic damping element (100) according to claim 7, wherein the respective outer webs (137) each comprise an outer web upper side (141) facing away from the sleeve ring interior space (104), in particular a straight-formed outer web upper side (141), wherein the outer webs (137) each comprise a first outer web side wall (143-1), in particular a curved-formed first outer web side wall (143-1), which faces a first outer web recess (139-1) of the two outer web recesses (139, 139-1, 139-2), and/or wherein the outer webs (137) each comprise a second outer web side wall (143-2), in particular a curved-formed second outer web side wall (143-2), which faces a second outer web recess (139-2) of the two outer web recesses (139, 139-1, 139-2).

9. Elastic damping element (100) according to one of the preceding claims, wherein the elastic sleeve ring (101) comprises a closure section (171) for closing the elastic sleeve ring (101) around the line, wherein in particular a barb (175) is formed at a first region (173) of the closure section (171), and wherein in particular a receiving opening (179) for receiving the barb (175) is formed at a second region (177) of the closure section (171).

10. Elastic damping element (100) according to one of the preceding claims, wherein the contact element (167) is a contact rib and/or a contact ring, which is adapted to abut at a wall (169) of the additional component (155) facing the elastic sleeve ring (101).

11. Elastic fastening system (200) comprising an elastic damping element (100) according to one of the preceding claims and a line, which is received in the sleeve ring interior space (104) enclosed by the inner wall (103) of the elastic sleeve ring (101).

## Revendications

1. Élément d'amortissement élastique (100) pour amortir les vibrations d'une ligne, comprenant :
un anneau de manchon élastique (101) pour enfermer la ligne, dans lequel l'anneau de manchon élastique (101) comprend une paroi intérieure (103) faisant face à la ligne, qui enferme un espace intérieur d'anneau de manchon (104) pour recevoir la ligne,
dans lequel une pluralité d'évidements s'étendant radialement (105, 105-1, 105-2) sont formés dans la paroi intérieure (103), dans lequel une bande incurvée et conique (107) s'étendant dans la direction de l'espace intérieur de la bague de manchon (104) est formée entre deux évidements (105, 105-1, 105-2) formés l'un à côté de l'autre dans la paroi intérieure (103),
dans lequel la bague de manchon élastique (101) comprend une paroi extérieure (135) opposée à la ligne, dans lequel un élément de fixation (153) est disposé sur la paroi extérieure (135), lequel élément de fixation (153) s'étend radialement depuis la paroi extérieure (135) et est adapté pour relier l'élément d'amortissement élastique (100) à un composant supplémentaire (155) de manière enfichable, dans lequel l'élément de fixation (153) comprend une tige de fixation (157), qui est reliée à la paroi extérieure (135) de la bague de manchon élastique (101) et qui s'étend depuis la paroi extérieure (135) en direction du composant supplémentaire (155) et est adaptée pour passer à travers une ouverture de fixation (159) du composant supplémentaire (155), et dans lequel au moins une saillie de fixation (161) est disposée sur la tige de fixation (157), laquelle au moins une saillie de fixation (161) est adaptée pour venir en butée sur un côté du composant supplémentaire (155) opposé à la ligne élastique élément d'amortissement (100) afin d'assurer une fixation efficace de l'élément de fixation (153) au composant supplémentaire (155),
dans laquelle la paroi extérieure (135) de la bague de manchon élastique (101) comprend une surface de contact (165) faisant face au composant supplémentaire (155), dans laquelle un élément de contact (167) est disposé sur la surface de contact (165), lequel élément de contact (167) est adapté pour venir en butée contre une paroi (169) du composant supplémentaire (155) faisant face à la bague de manchon élastique (101), et
dans lequel la bague de manchon élastique (101) de l'élément d'amortissement élastique (100) est réalisée sous la forme d'une bague de manchon fermée dans la direction circonférentielle (109) de la bague de manchon élastique (101) ou sous la forme d'une bague de manchon fermable dans la direction circonférentielle (109) de la bague de manchon élastique (101).

2. Élément d'amortissement élastique (100) selon la revendication 1, dans lequel les nervures (107) sont courbées dans la même direction circonférentielle (109).

3. Élément d'amortissement élastique (100) selon la revendication 1 ou 2, dans lequel la bande respective (107) comprend une première paroi latérale incurvée (111) faisant face à un premier évidement (105, 105-1) parmi les deux évidements (105, 105-1, 105-2) formés côte à côte dans la paroi intérieure (103), et dans lequel la bande respective (107) comprend une seconde paroi latérale incurvée (113) faisant face à un second évidement (105, 105-2) parmi les deux évidements (105, 105-1, 105-2) formés côte à côte dans la paroi intérieure (103),
dans lequel en particulier la première paroi latérale de bande incurvée (111) de la bande respective (107) est formée comme une première paroi latérale de bande incurvée de manière concave (111), et dans lequel en particulier la deuxième paroi latérale de bande incurvée (113) de la bande respective (107) est formée comme une deuxième paroi latérale de bande incurvée de manière convexe (113).

4. Élément d'amortissement élastique (100) selon la revendication 3, dans lequel la bande respective (107) s'étend le long d'un axe longitudinal (129) parallèle à la direction longitudinale de la ligne délimitée par la bague de manchon élastique (101),
dans lequel la première paroi latérale de bande incurvée (111) et la seconde paroi latérale de bande incurvée (113) sont chacune incurvées autour d'un premier et d'un second axes de courbure (131, 133) s'étendant parallèlement à l'axe longitudinal de bande respectif (129), dans lequel l'axe de courbure respectif (131, 133) est déplacé par rapport à l'axe longitudinal de bande respectif (129) le long d'une direction circonférentielle (109) de l'anneau de manchon élastique (101).

5. Élément d'amortissement élastique (100) selon l'une des revendications précédentes, dans lequel une pointe d'âme (117) de l'âme (107), qui est courbée et effilée radialement en direction de l' espace intérieur de la bague de manchon (104), est adaptée pour venir en butée contre une ligne reçue dans l'espace intérieur de la bague de manchon (104), la pointe d'âme respective (117) en particulier étant adaptée pour être déplacée au moins par sections radialement en direction de la paroi intérieure (103) par la ligne venant en butée contre la pointe d'âme (117) afin de fournir une force de contact sur la ligne.

6. Élément d'amortissement élastique (100) selon l'une des revendications précédentes, dans lequel un axe de direction radiale (119) de la bande (107) respective s'étend d'un point central (121) d'une surface de base (123) de la bande (107) respective jusqu'à un axe central (125) du manchon de la bague élastique (101),
dans lequel la bande respective (107) comprend un axe central de bande (127), qui s'étend d'une pointe de bande (117) de la bande respective (107) en se rétrécissant radialement dans la direction de l'espace intérieur de la bague de manchon (104) de la bague de manchon élastique (101) jusqu'au point central (121) de la surface de base (123) de la bande respective (107), et
dans lequel l'axe central de bande respectif (127) s'étend à un angle par rapport à l'axe de direction radiale respectif (119).

7. Élément d'amortissement élastique (100) selon l'une des revendications précédentes, dans lequel plusieurs nervures extérieures (137) s'étendant radialement sont formées sur la paroi extérieure (135), lesquelles nervures extérieures (137) sont conçues pour assurer un espacement par rapport aux composants disposés à l'extérieur de l'élément d'amortissement élastique (100), dans les nervures extérieures (137) sont notamment disposées l'une à côté de l'autre dans la direction circonférentielle (109) de la bague de manchon élastique (101) sur la paroi extérieure (135), et deux nervures extérieures (137) disposées l'une à côté de l'autre dans la direction circonférentielle (109) sur la paroi extérieure (135) sont notamment espacées l'une de l'autre par un évidement de nervure extérieure respectif (139, 139-1, 139-2).

8. Élément d'amortissement élastique (100) selon la revendication 7, dans lequel les nervures extérieures (137) respectives comprennent chacune une face supérieure (141) opposée à l'espace intérieur (104) de la bague de manchon, en particulier une face supérieure (141) de forme rectiligne, dans les nervures extérieures (137) comprennent chacune une première paroi latérale (143-1), en particulier une paroi latérale incurvée (143-1), qui fait face à un premier évidement (139-1) des deux évidements (139, 139-1, 139-2), et/ou les nervures extérieures (137) comprennent chacune une seconde paroi latérale (143-2), en particulier une seconde paroi latérale incurvée (143-2), qui fait face à un second évidement (139-2) des deux évidements (139, 139-1, 139-2).

9. Élément d'amortissement élastique (100) selon l'une des revendications précédentes, dans lequel la bague de manchon élastique (101) comprend une section de fermeture (171) pour fermer la bague de manchon élastique (101) autour de la ligne, dans lequel en particulier une pointe (175) est formée dans une première région (173) de la section de fermeture (171), et dans lequel en particulier une ouverture de réception (179) pour recevoir la pointe (175) est formée dans une deuxième région (177) de la section de fermeture (171).

10. Élément d'amortissement élastique (100) selon l'une des revendications précédentes, dans lequel l'élément de contact (167) est une nervure de contact et/ou une bague de contact, qui est adaptée pour venir en butée contre une paroi (169) du composant supplémentaire (155) faisant face à la bague de manchon élastique (101).

11. Système de fixation élastique (200) comprenant un élément d'amortissement élastique (100) selon l'une des revendications précédentes et une ligne, qui est reçue dans l'espace intérieur de la bague de manchon (104) entouré par la paroi intérieure (103) de la bague de manchon élastique (101).
